# EUROPEAN PATENT SPECIFICATION

(11) **EP 1 101 095 B1**
(45) Date of publication and mention of the grant of the patent: **08.11.2006**
(21) Application number: 00927967.0
(22) Date of filing: 10.05.2000
(51) Int. Cl.: G01N 11/08

(54) **A DEVICE FOR ANALYSING PREFERABLY ANIMAL MANURE**
GERÄT ZUR ANALYSE VON VORZUGSWEISE TIERISCHEN EXKREMENTEN
DISPOSITIF D'ANALYSE DU FUMIER

(30) Priority: 25.05.1999 NL 1012136
(43) Date of publication of application: 23.05.2001
(73) Proprietor: MAASLAND N.V., 3147 PA Maassluis (NL)
(72) Inventor: VAN DEN BERG, Karel, NL-2971 BR Bleskensgraaf (NL)
(74) Representative: Corten, Maurice Jean F.M.
(86) International application number: PCT/NL2000/000307
(87) International publication number: WO 2000/071988

(56) References cited:
- DE-A- 3 306 476
- GB-A- 2 288 879
- NL-A- 9 201 359
- US-A- 4 170 798
- US-A- 5 355 833

## Description

The invention relates to a device for analysing preferably animal manure.

Such a device is known from US-A-5 355 833 which discloses a device for analysing animal manure provided with manure analysing means for determining the composition and/or the viscosity and/or the fibrousness of a manure sample, identification means for establishing the Identity of the individual belonging to the manure sample, the device comprising a computer which is adapted to determine, on the basis of the manure analysis results of the manure sample of a specific animal, an optimum food composition and/or feed distribution.

With the known device the manure sample is analysed on laboratory scale, usually very extensively. This is a complicated and very time-consuming activity.

The invention aims at a device of the above-mentioned type by means of which a diagnosis can be made rather simply and quickly on the basis of an analysis of a manure sample.

In accordance with the invention this is achieved by a device according to claim 1. On the basis of the viscosity and/or the fibrousness of the manure sample it is possible to determine whether the individual receives the correct amount of feed and/or whether the composition of the food is well attuned to the individual.

According to an inventive feature, the manure analysing means comprise a press with a compression chamber which is provided with at least one aperture via which the manure can flow out of the compression chamber during compression of the manure sample. In a preferred embodiment of the invention, the compression chamber comprises at least one wall which is designed as a sieve. According to the invention, the manure analysing means further comprise force recording means with the aid of which the pressure force is determined during compression of the manure sample. On the basis of the pressure force required during compression, the viscosity of the manure sample can subsequently be determined. According to an inventive feature, for the purpose of establishing the percentage of fibres in the manure sample, the manure analysing means comprise measuring means with the aid of which the amount of solid material is determined after compression-According to an inventive feature, the measuring means may comprise a clinometer. By means of the clinometer it is possible to establish to what extent the compression chamber has been reduced after compression, after which it is known how much remaining space of the compression chamber is filled with solid material.

In accordance with another inventive feature, the manure analysing means comprise cleaning means with the aid of which the press can be cleaned after compression. Thus it is prevented that the press is blocked or that the analysis of a new manure sample is disturbed by a previous analysis of a previous manure sample. According to an inventive feature, the manure analysing means comprise a gripper. According to again another inventive feature, the manure analysing means comprise a mass inertia meter. By shaking the manure sample it is possible to determine the mass inertia of the manure sample, said mass inertia being a measure for the viscosity of the manure sample. According to again another inventive feature, the manure analysing means comprise a temperature sensor by means of which the temperature of the manure sample is determined. On the basis of the latter information it is thus possible to compensate influences of temperature on the viscosity of the manure.

For the purpose of establishing which manure sample belongs to which individual, according to the invention the device comprises identification means with the aid of which the identity of the individual belonging to the manure sample is established. The identification means may be constituted by identification systems known per se, such as e.g. a cow recognition system.

According to again another inventive feature, the device comprises a computer which is adapted to convert the manure analysis results of the manure sample of a specific animal into an optimum food composition and/or feed distribution. Depending on the result of the manure analysis sample it is thus possible to alter the composition of the feed and/or to adjust the amount of feed and/or the point of time at which the feed is administered. In an embodiment of the invention, the manure analysis results processed by the computer are supplied to a roughage and/or concentrate feeding station for the distribution and/or the composition of the food.

The invention will now be explained in further detail with reference to the accompanying drawings.
Figure 1 is a plan view of a stable with an unmanned vehicle accommodated therein, on which vehicle the device according to the invention is disposed;
Figure 2 is a plan view of the unmanned vehicle depicted in Figure 1;
Figure 3 is a longitudinal cross-section of a press with a compression chamber, and
Figure 4 shows the manure analysing means in the form of a mass inertia meter.

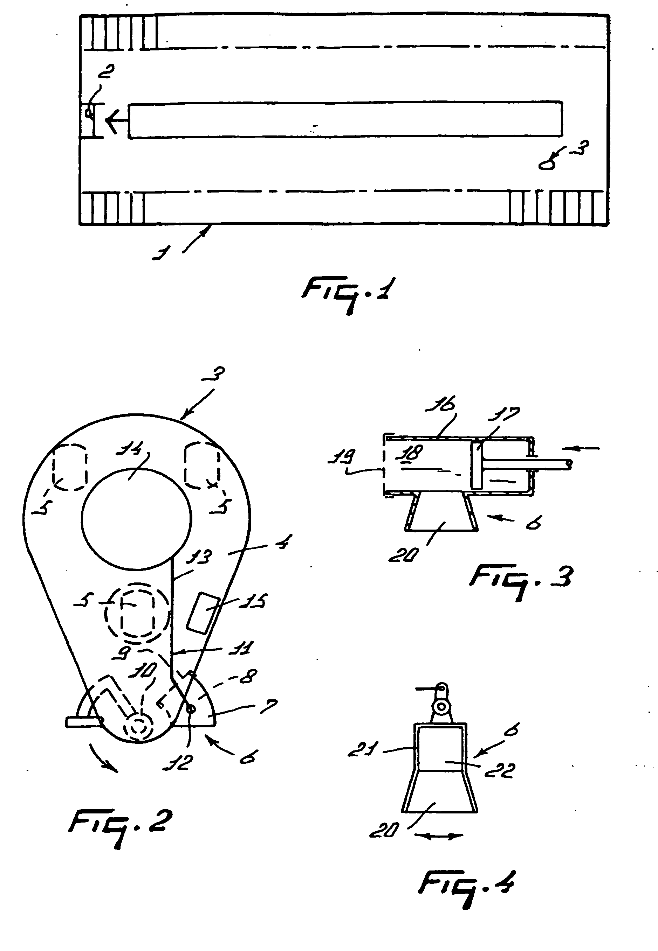

Figure 1 is a plan view of a stable 1 provided with a milking robot 2 for automatically milking animals and an unmanned vehicle 3 on which a device 4 for analysing a manure sample is disposed.

Figure 2 is a plan view of the unmanned vehicle 3 which comprises wheels 5 that are driven by a (non-shown) drive unit. The unmanned vehicle 3 is further provided with manure analysing means 6. In the present embodiment the manure analysing means 6 comprise a gripper 7 including a chamber 8 for the manure sample, one wall 9 of the gripper 7 being designed as a sieve. By means of a motor 10 the wall 9 is rotated in the direction of the chamber 8, which results in that the liquid components of the manure are able to leave the chamber 8 through the sieve in the wall 9. The motor 10 is provided with a (non-shown) clinometer by means of which, after the manure sample has been compressed, the remaining contents of the chamber 8 can be determined. The chamber 8 then contains only solid components, such as fibres from the manure sample. The manure analysing means 6 further comprise cleaning means 11 with the aid of which the compression chamber 8 and the wall 9 can be cleaned. The cleaning means comprise a sprayer 12 which is connected to a liquid receptacle 14 by means of a pipe 13.

The manure analysing means 6 are further provided with identification means 15 with the aid of which the identity of the individual belonging to the manure sample is established.

Instead of a gripper 7 it is further possible to design the manure analysing means 6 in the form of a cylinder. Such an embodiment is shown in Figure 3. The manure analysing means 6 in Figure 3 comprise a cylindrical housing 16 with a piston 17 and a compression chamber 18. The end of the compression chamber 18 is designed as a sieve 19. Via the sieve 19 liquid components of the manure are able to leave the compression chamber 18 during compression. The compression chamber 18 is further connected to a filling member 20 by means of which the compression chamber 18 can be filled with a manure sample.

In Figure 4 the manure analysing means 6 comprise a mass inertia meter 21. The mass inertia meter 21 comprises a receptacle 22 into which a manure sample can be brought, which receptacle 22 is pivoted by means of a (non-shown) operating member. During pivoting of the receptacle 22 the mass inertia of the manure sample is measured by means of a (non-shown) sensor. The mass inertia of the manure sample is converted by a (non-shown) computer into the viscosity of the manure sample.

## Claims

1. A device for analysing animal manure, said device being provided with manure analysing means (6) for determining the composition and/or the viscosity and/or the fibrousness of a manure sample, identification means (15) for establishing the identity of the individual belonging to the manure sample, said device comprising a computer which is adapted to determine, on the basis of the manure analysis results of the manure sample of a specific animal, an optimum food composition and/or feed distribution, **characterized in that** the manure analysing means (6) are disposed on an unmanned vehicle (3).

2. A device as claimed in claim 1, **characterized in that** the manure analysing means (6) comprise a press including a compression chamber (8) which is provided with at least one aperture via which the manure cen flow out of the compression chamber (8) during compression of the manure sample.

3. A device as claimed in daim 2. **characterized in that** the compression chamber (8) comprises at least one wall (9) which is designed as a sieve (19).

4. A device as claimed in claim 2 or 3, **characterized in that** the manure analysing means (6) comprise force recording means for determining the pressure force during compression of the manure sample.

5. A device as claimed in any one of claims 2 to 4. **characterized in that** the manure analysing means (6) comprise measuring means for determining the amount of solid material, such as fibres, after compression.

6. A device as daimed in claim 5, **characterized i**n that the measuring means comprise a clinometer.

7. A device as daimed in any one of claims 2 to 5, **characterized in that** the manure analysing means (6) comprise cleaning means (11) for cleaning the press after compression.

8. A device as daimed in any one of the preceding claims, **characterized i**n that the manure analysing means (6) comprise a gripper (7).

9. A device as daimed in any one of the preceding claims, **characterized in that** the manure analysing means (6) comprise a mass inertia meter (21).

10. A device as claimed in any one of the preceding claims, **characterized in that** the manure analysing means (6) comprise a temperature sensor for determining the temperature of the manure sample.

11. A device as claimed in any one of the preceding claims,
**characterized in that** the manure analysis results processed by the computer are supplied to a roughage and/or concentrate feeding station for the distribution and/or the composition of the food.

12. A device as claimed in any one of the preceding claims, **characterized in that** the manure analysis results are registered per animal in a computer.

13. A device as claimed in claim 12, c**haracterized in that** the manure analysis results are registered in the form of a graph or a table, whereby the pressure force against the contents of the compression chamber is registered.

14. A device as claimed in any one of the preceding claims. **characterized in that** in the computer one or more adjustable threshold values have been inputted and that, when one of these threshold values is exceeded, an animal is separated in a separation area and/or a supervisor is given a signal by means of signalling means that the relevant animal has exceeded this threshold value.

## Patentansprüche

1. Vorrichtung zum Analysieren von Tiermist, wobei die Vorrichtung mit einer Mistanalysiervorrichtung (6) zum Ermitteln der Zusammensetzung und/oder der Viskosität und/oder der faserigen Beschaffenheit einer Mistprobe und mit einer Identifikationsvorrichtung (15) zum Ermitteln der Identität des zu der Mistprobe gehörenden Tieres versehen ist, wobei die Vorrichtung einen Computer umfaßt, der geeignet ist, auf der Basis der Mistanalyseergebnisse der Mistprobe eines bestimmten Tieres eine optimale Futterzusammensetzung und/oder Futterverteilung zu ermitteln,
**dadurch gekennzeichnet, daß** die Mistanalysiervorrichtung (6) an einem unbemannten Fahrzeug (3) angeordnet ist.

2. Vorrichtung nach Anspruch 1,
**dadurch gekennzeichnet, daß** die Mistanalysiervorrichtung (6) eine Presse mit einer Verdichtungskammer (8) umfaßt, die mit mindestens einer Öffnung versehen ist, durch die der Mist während der Verdichtung der Mistprobe aus der Verdichtungskammer (8) austreten kann.

3. Vorrichtung nach Anspruch 2,
**dadurch gekennzeichnet, daß** die Verdichtungskammer (8) mindestens eine Wand (9) umfaßt, die als Sieb (19) ausgebildet ist.

4. Vorrichtung nach Anspruch 2 oder 3,
**dadurch gekennzeichnet, daß** die Mistanalysiervorrichtung (6) eine Kraftaufzeichnungsvorrichtung zur Ermittlung der Druckkraft während der Verdichtung der Mistprobe umfaßt.

5. Vorrichtung nach einem der Ansprüche 2 bis 4,
**dadurch gekennzeichnet, daß** die Mistanalysiervorrichtung (6) eine Meßvorrichtung zur Ermittlung der Menge an Feststoffen, wie z. B. Fasern, nach der Verdichtung umfaßt.

6. Vorrichtung nach Anspruch 5,
**dadurch gekennzeichnet, daß** die Meßvorrichtung ein Klinometer umfaßt.

7. Vorrichtung nach einem der Ansprüche 2 bis 5,
**dadurch gekennzeichnet, daß** die Mistanalysiervorrichtung (6) eine Reinigungsvorrichtung (11) zum Reinigen der Presse nach der Verdichtung umfaßt.

8. Vorrichtung nach einem der vorhergehenden Ansprüche,
**dadurch gekennzeichnet, daß** die Mistanalysiervorrichtung (6) einen Greifer (7) umfaßt.

9. Vorrichtung nach einem der vorhergehenden Ansprüche,
**dadurch gekennzeichnet, daß** die Mistanalysiervorrichtung (6) einen Trägheitsmesser (21) umfaßt.

10. Vorrichtung nach einem der vorhergehenden Ansprüche,
**dadurch gekennzeichnet, daß** die Mistanalysiervorrichtung (6) einen Temperatursensor zur Ermittlung der Temperatur der Mistprobe umfaßt.

11. Vorrichtung nach einem der vorhergehenden Ansprüche,
**dadurch gekennzeichnet, daß** die von dem Computer verarbeiteten Mistanalyseergebnisse an eine Rauhfutter- und/oder Kraftfutter-Fütterungsstation zur Verteilung und/oder Zusammensetzung des Futters weitergeleitet werden.

12. Vorrichtung nach einem der vorhergehenden Ansprüche,
**dadurch gekennzeichnet, daß** die Mistanalyseergebnisse für jedes Tier in einem Computer aufgezeichnet werden.

13. Vorrichtung nach Anspruch 12,
**dadurch gekennzeichnet, daß** die Mistanalyseergebnisse in Form eines Diagramms oder einer Tabelle aufgezeichnet werden, wobei die auf den Inhalt der Verdichtungskammer ausgeübte Druckkraft aufgezeichnet wird.

14. Vorrichtung nach einem der vorhergehenden Ansprüche,
**dadurch gekennzeichnet, daß** ein oder mehrere einstellbare Grenzwerte in den Computer eingegeben sind, und daß ein Tier bei Überschreiten eines dieser Grenzwerte in einem Absonderungsbereich abgesondert wird und/oder einem Aufseher mittels einer Signalvorrichtung ein Signal gegeben wird, daß das betreffende Tier diesen Grenzwert überschritten hat.

## Revendications

1. Dispositif d'analyse de fumier animal, ledit dispositif étant pourvu de moyens d'analyse de fumier (6) destinés à déterminer la composition et/ou la viscosité et/ou la fibrosité d'un échantillon de fumier, de moyens d'identification (15) destinés à établir l'identité de l'animal auquel appartient l'échantillon de fumier, ledit dispositif comprenant un ordinateur qui est adapté pour déterminer, sur la base des résultats de l'analyse de fumier de l'échantillon de fumier d'un animal spécifique, une composition et/ou une répartition alimentaires optimales, **caractérisé en ce que** les moyens d'analyse de fumier (6) sont disposés sur un engin téléguidé (3).

2. Dispositif selon la revendication 1, **caractérisé en ce que** les moyens d'analyse de fumier (6) comprennent une presse comprenant une chambre de compression (8) qui est pourvue d'au moins une ouverture par l'intermédiaire de laquelle le fumier peut s'écouler hors de la chambre de compression (8) pendant la compression de l'échantillon de fumier.

3. Dispositif selon la revendication 2, **caractérisé en ce que** la chambre de compression (8) comprend au moins une paroi (9) qui est conçue comme un tamis (19).

4. Dispositif selon la revendication 2 ou 3, **caractérisé en ce que** les moyens d'analyse de fumier (6) comprennent des moyens d'enregistrement de force destinés à déterminer la force de pression pendant la compression de l'échantillon de fumier.

5. Dispositif selon l'une quelconque des revendications 2 à 4, **caractérisé en ce que** les moyens d'analyse de fumier (6) comprennent des moyens de mesure destinés à déterminer la quantité de matière solide, telle que des fibres, après la compression.

6. Dispositif selon la revendication 5, **caractérisé en ce que** les moyens de mesure comprennent un clinomètre.

7. Dispositif selon l'une quelconque des revendications 2 à 5, **caractérisé en ce que** les moyens d'analyse de fumier (6) comprennent des moyens de nettoyage (11) destinés à nettoyer la presse après la compression.

8. Dispositif selon l'une quelconque des revendications précédentes, **caractérisé en ce que** les moyens d'analyse de fumier (6) comprennent une pince de préhension (7).

9. Dispositif selon l'une quelconque des revendications précédentes, **caractérisé en ce que** les moyens d'analyse de fumier (6) comprennent un compteur d'inertie massique (21).

10. Dispositif selon l'une quelconque des revendications précédentes, **caractérisé en ce que** les moyens d'analyse de fumier (6) comprennent un capteur de température destiné à déterminer la température de l'échantillon de fumier.

11. Dispositif selon l'une quelconque des revendications précédentes, **caractérisé en ce que** les résultats d'analyse de fumier traités par l'ordinateur sont fournis à une station d'alimentation en fibres alimentaires et/ou aliments de lest pour la répartition et/ou la composition de l'aliment.

12. Dispositif selon l'une quelconque des revendications précédentes, **caractérisé en ce que** les résultats d'analyse de fumier sont enregistrés par animal dans un ordinateur.

13. Dispositif selon la revendication 12, **caractérisé en ce que** les résultats d'analyse de fumier sont enregistrés sous forme de graphique ou de tableau, de sorte que la force de pression contre le contenu de la chambre de compression est enregistrée.

14. Dispositif selon l'une quelconque des revendications précédentes, **caractérisé en ce que**, dans l'ordinateur, une ou plusieurs valeurs de seuil ajustables ont été entrées et **en ce que**, quand une de ces valeurs de seuil est dépassée, un animal est séparé dans une zone de séparation et/ou un superviseur se voit communiquer un signal au moyen de moyens de signalement du fait que l'animal concerné a dépassé cette valeur de seuil.
